# EUROPÄISCHE PATENTSCHRIFT

(11) **EP 0 776 494 B1**
(45) Veröffentlichungstag und Bekanntmachung des Hinweises auf die Patenterteilung: **26.08.1998**
(21) Anmeldenummer: 95923191.1
(22) Anmeldetag: 30.06.1995
(51) Int. Cl.: G05B 19/05, G06F 13/38

(54) **ANORDNUNG MIT EINER SIGNALVERARBEITUNGSANSCHALTUNG UND EINER FUNKTIONSEINHEIT**
ARRANGEMENT WITH A SIGNAL PROCESSING CONNECTION AND A FUNCTIONAL UNIT
MONTAGE AVEC UNE CONNEXION DE TRAITEMENT DE SIGNAUX ET UNE UNITE FONCTIONNELLE

(30) Priorität: 19.08.1994 DE 4429278
(43) Veröffentlichungstag der Anmeldung: 04.06.1997
(73) Patentinhaber: SIEMENS AKTIENGESELLSCHAFT, 80333 München (DE)
(72) Erfinder: KNAUER, Detlev, D-76843 Herxheim (DE)
(86) Internationale Anmeldenummer: DE9500852
(87) Internationale Veröffentlichungsnummer: WO9606386

(56) Entgegenhaltungen:
- EP-A- 0 352 683
- EP-A- 0 421 471
- EP-A- 0 559 163
- WO-A-94/15299
- US-A- 4 951 235

## Beschreibung

Die Erfindung betrifft eine Funktionseinheit gemäß dem Oberbegriff des Anspruchs 1.

In modularen Automatisierungssystemen ist es erwünscht, die Ein- und Ausgabekomponenten des Systems an die in einem technischen Prozeß auftretenden Verhältnisse im Hinblick auf den Einsatz der Aktoren und Sensoren anzupassen. Dazu ist es erforderlich, daß die CPU-Einheit des Systems die Art der Konfiguration ermittelt, um die Konsistenz zwischen einem projektierten, im Anwenderprogramm vorausgesetzten und einem tatsächlichen Aufbau, z. B. für Diagnosezwecke, zu ermitteln.

In der internationalen Patentanmeldung WO 94/15299 ist eine Anordnung mit einer CPU-Einheit beschrieben, welche erkennt, ob die Steckplätze der Anordnung mit Funktionseinheiten bestückt sind. Dazu weisen die steckbaren Einheiten Pegelumschaltmittel auf, die, für den Fall, daß die Einheiten ein Steckplatzidentifizierungssignal der CPU-Einheit während eines Lesezugriffs empfangen, den Pegel der ihr zugeordneten Adreßleitung umschalten.

Um in Automatisierungssystemen trotz eines hohen Ausbaugrades die Anzahl der in das Automatisierungsgerät eingebauten Ein-und Ausgabekomponenten zu verringern, werden dezentrale Peripheriesysteme, z. B. in Form einer sogenannten "aktiven Klemme", eingesetzt. Ein Gehäuse mit Peripheriebaugruppen ist zu den Aktoren und Sensoren am Prozeß verlagert, und es ist lediglich nur eine Anschaltungsbaugruppe im Automatisierungsgerät erforderlich, welche über ein Kabel mit dem dezentralen Peripheriesystem verbunden ist. Die in der internationalen Anmeldung WO 94/15299 vorgeschlagene Anordnung kann zwar erkennen, ob die Anschaltung in einem Steckplatz des Automatisierungsgerätes gesteckt ist, sie kann allerdings nicht erkennen, ob die Peripheriebaugruppen im dezentralen Peripheriesystem vorhanden sind.

Aus der US-PS 4 951 235 ist eine elektronische Vorrichtung mit einer Schreibmaschine, einer Detektionsschaltung und einer Funktionseinheit, z. B. eine Funktionseinheit in Form eines Diskettenlaufwerks, bekannt. Dabei erkennt die Detektionsschaltung, ob eine Funktionseinheit an die Schreibmaschine angeschlossen ist, wobei die Funktionseinheit über Versorgungsleitungen und über eine Signalleitung an die Detektionsschaltung anschließbar ist.

EP-A-0 352 683 beschreibt eine Modulidentifizierungsschaltung eines mit einem Prozessor verbundenen Funktionsmoduls, die einen vom Prozessor jeweils adressierbaren Eingabe- und Ausgabeport aufweist. Ferner ist das Funktionsmodul mit einer Einrichtung zum Koppeln des Eingabeports mit dem Ausgabeport versehen, derart, daß die Eigenschaften des Funktionsmoduls codiert werden und der Prozessor durch Schreiben von Daten auf den Ausgabeport und Rücklesen der Daten über den Eingabeport den Typ des Funktionsmoduls identifiziert. Dabei weist der Eingabeport eine Vielzahl paralleler Datenbiteingänge und der Ausgabeport eine Vielzahl paralleler Datenbitausgänge auf, wobei die Einrichtung das Funktionsmodul codiert, indem die Einrichtung einige der Datenbiteingänge mit den Datenbitausgängen verbindet und dadurch ein Verbindungsmuster erzeugt.

EP-A-0 424 471 lehrt ein Kommunikationsverfahren für eine Schaltungsanordnung, die aus einer Zentrale und mehreren Peripherieeinheiten besteht. Zur Erhöhung der Störsicherheit ist vorgesehen, daß jede Peripherieeinheit nach ihrer Aktivierung ein Kennungssignal in Form von codierten Stromimpulsen an die Zentrale über eine bidirektionale Busleitung zurücksendet.

Der vorliegenden Erfindung liegt die Aufgabe zugrunde, eine Funktionseinheit der eingangs genannten Art anzugeben, welche ohne anliegende Versorgungsspannung identifizierbar ist.

Diese Aufgabe wird durch die im kennzeichnenden Teil des Anspruchs 1 angegebenen Maßnahmen gelöst.
Die Funktionseinheit ist auch dann identifizierbar, wenn sie von ihrer Signalverarbeitungsanschaltung räumlich unabhängig aufgestellt ist. Es ist nicht erforderlich, daß die Signalverarbeitungsanschaltung und die Funktionseinheit z. B. zusammen in einem mit einem Rückwandbus versehenen Automatisierungsgerät angeordnet sind.

Weitere Ausgestaltungen der Erfindung ergeben sich aus den Unteransprüchen.

Die Einrichtung der Funktionseinheit kann aktiv oder passiv ausgebildet sein. Eine aktive Einrichtung weist Mittel zum Erzeugen eines Identifikationssignals aus einer in der Einrichtung selbst erzeugten Spannung auf; eine passive Einrichtung dagegen formt eine von der Signalverarbeitungsanschaltung zugeführte Spannung in eine Identifikationsspannung um. Vorzugsweise werden die Spannung der Anschaltung sowie die Identifikationsspannung über die vorhandene Signalleitung übertragen.

Anhand der Zeichnungen, in denen ein Ausführungsbeispiel der Erfindung dargestellt ist, werden im folgenden die Erfindung sowie Ausgestaltungen und Vorteile näher erläutert.

Es zeigen:
- Figur 1: ein dezentrales Peripheriesystem und
- Figur 2: ein Prinzipschaltbild einer Signalverarbeitungsanschaltung eines Automatisierungsgerätes mit angeschlossenen Digitalein-/ausgabeeinheiten.

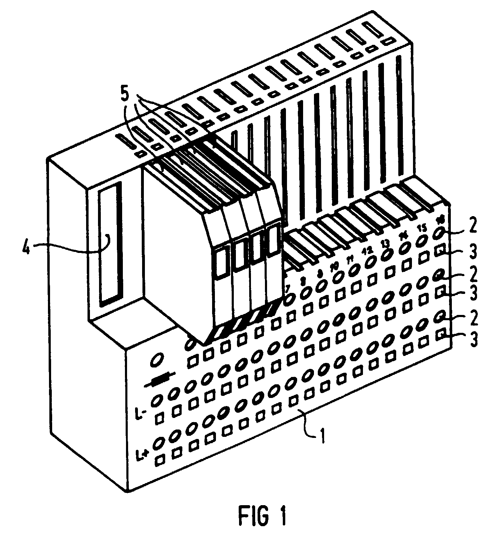

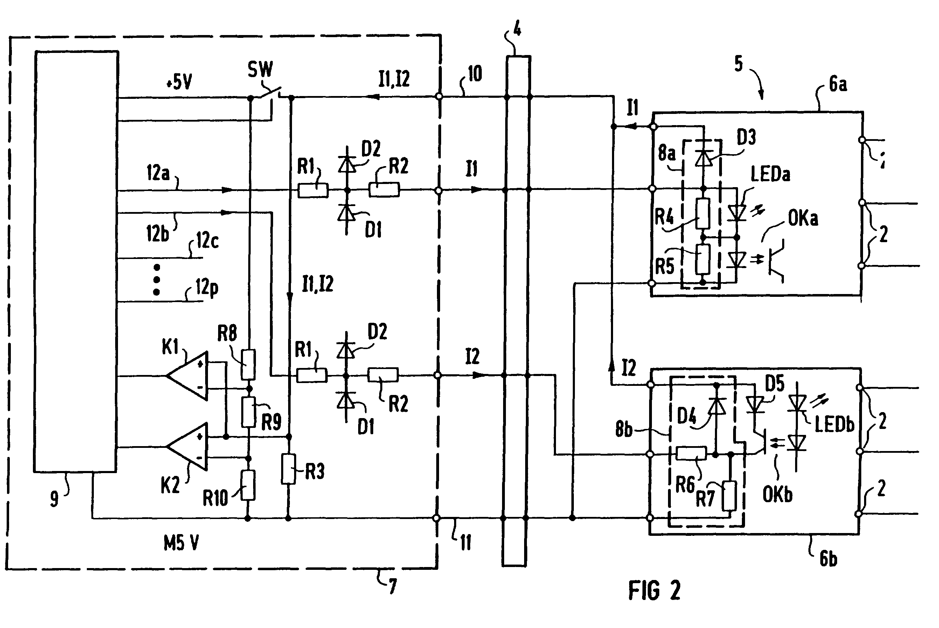

In Figur 1 ist ein Gehäuse 1 eines dezentralen Peripheriesystems dargestellt, welches mit drei Reihen von Öffnungen 2 versehen ist. Diese Öffnungen 2 weisen schraubenlose Federklemmen zum Anschluß von externen Leitungen auf, die über Betätigungsöffnungen 3 lösbar sind. In das Gehäuse 1 sind Digitalein- und -ausgabemodule 5 montiert, deren Eingänge mit dem Kabelanschluß 4 und deren Ausgänge mit den Öffnungen 2 durch eine hier nicht dargestellte Leiterplatte im Gehäuse 1 verbunden sind. Am linken Ende der Reihe von Öffnungen 2 sind mit L- und L+ bezeichnete Öffnungen für Potentialleitungen angebracht, die zur Zuführung der Potentialleitungen auf ein Sicherungsmodul mit einer von vorne austauschbaren Sicherung dienen. An den Kabelanschluß 4 ist ein Flachbandkabel anschließbar, welches das dezentrale Peripheriesystem 1 mit einer Signalverarbeitungsanschaltung 7 (Figur 2) eines Automatisierungsgerätes verbindet. Jedem Digitalein- und -ausgabemodul sind drei Öffnungen 2 zugeordnet, an welche Aktoren oder Sensoren mit einem Dreileiter-Anschluß anschließbar sind. Dabei sind jeweils zwei dieser drei Öffnungen 2 mit einer Versorgungsspannung für die Sensoren/Aktoren beaufschlagt, eine Öffnung ist für den Anschluß einer Signalleitung vorgesehen. Im vorliegenden Beispiel sind in das dezentrale Peripheriesystem sechzehn Digitalein- und -ausgabemodule steckbar, wodurch das am Kabelanschluß 4 anzuschließende Flachbandkabel insgesamt achtzehn Leitungen aufweisen muß, von denen sechzehn Leitungen für die Signalübertragung zwischen der Anschaltung und den maximal sechzehn montierbaren bzw. steckbaren Modulen und zwei Leitungen für eine Spannungsversorgung +5 V, M5 V vorgesehen sind. Aus der Spannungsversorgung +5 V, M5 V bilden die Module 5 geeignete Versorgungsspannungen an zwei der drei Öffnungen 2 für die angeschlossenen Sensoren/Aktoren. Über den Federklemmen ist ein Beschriftungsfeld angeordnet, auf dem Kennzeichnungen 1 ... 16 (1 ... 6 in Figur 1 verdeckt) der einzelnen Anschlüsse untergebracht sind.

Zur Verdeutlichung der Funktions- und Wirkungsweise der Signalverarbeitungsanschaltung 7 des Automatisierungsgerätes im Hinblick auf eine Identifizierung der im dezentralen Peripheriesystem montierten Digital ein- und -ausgabemodule 5 wird auf Figur 2 verwiesen, in welcher ein Prinzipschaltbild dieser Signalverarbeitungsanschaltung 7 mit zwei angeschlossenen Digitalein- und -ausgabemodulen 5 dargestellt ist. Die in den Figuren 1 und 2 vorkommenden gleichen Teile sind mit gleichen Bezugszeichen versehen. Eines der Module 5 ist als Digitalausgabemodul 6a und das andere als Digitaleingabemodul 6b ausgebildet, wobei das Ausgabemodul 6a eine aus Widerständen R4, R5 und Diode D3 gebildete Einrichtung 8a, einen Optokoppler OKa und eine Leuchtdiode LEDa zur Anzeige des Signalzustandes umfaßt, das Eingabemodul 6b einen Optokoppler OKb, eine Leuchtdiode LEDb und eine Einrichtung 8b aus Widerständen R6, R7 und Diode D4.

In einem sogenannten Normalbetrieb versorgt eine Versorgungsund Identifikationseinrichtung 9 der Anschaltung 7 über die Leitungen 10, 11 des Flachbandkabels und über den Kabelanschluß 4 die Module 6a, 6b mit der Versorgungsspannung +5 V und M5 V. Dazu ist der steuerbare Schalter SW geschlossen, und in dieser Betriebsart werden die jeweiligen Signalleitungen 12a, 12p mit Signalen in Form von 0- oder 1-Pegeln beaufschlagt. Für den Fall, daß das Modul 5 ein Digitalausgabemodul ist (im Beispiel das Modul 6a), versorgt die Versorgungs- und Identifikationseinrichtung 9 entsprechend den Vorgaben eines Steuerprogramms dieses Ausgabemodul über die entsprechende Leitung 12a mit einem 0- oder 1-Pegel, im Falle eines Digitaleingabemoduls (im Beispiel das Modul 6b) versorgt dieses Modul über die Leitung 12b die Einrichtung 9 mit einem 0- oder 1-Pegel, welcher einem Meßwert an den Meßwerteingängen (Öffnungen 2) des Moduls entspricht. Jede der sechzehn Signalleitungen 12a ... 12p weist eine Eingangsbeschaltung aus Widerständen R1, R2 und Entkopplungsdioden D1, D2 auf, wobei die Funktions- und Wirkungsweise der Dioden D1, D2 für die Erfindung ohne Bedeutung ist und deshalb nicht näher erläutert wird.

In einer sogenannten Identifikationsbetriebsart, welche die Anschaltung 7 zyklisch oder nach vorgebbaren Zeiten einleitet, öffnet die Versorgungs- und Identifikationseinrichtung 9 den Schalter SW, wodurch die Versorgung der Module 5 mit der Spannung +5 V, M5 V unterbrochen wird. Statt dessen beaufschlagt die Versorgungs- und Identifikationseinrichtung 9 die Module 5 nacheinander über die Signalleitungen 12a ... 12p mit einer Prüfspannunq von gewöhnlich 5 V. Die Bauelemente der Einrichtungen 8a, 8b der Digitalein- und -ausgabemodule sind so dimensioniert, daß bei dieser Prüfspannung die Ausgänge 2 des Digitalausgabemoduls 6a nicht durchschalten und eventuell angesteuerte Eingänge 2 des Digitaleingabemoduls 6b die Anschaltung 7 im Hinblick auf eine Identifikation dieses Moduls nicht beeinflussen. Es ist angenommen, daß die Einrichtung 9 zunächst das Digitalausgabemodul 6a über die Signalleitung 12a mit einer Prüfspannung von 5 V beaufschlagt. Dadurch fließt ein Strom I1 über die Widerstände R1, R2, die Diode D3 und einen Eingangswiderstand R3 von Komparatoren K1, K2. Es entsteht an diesem Eingangswiderstand R3 eine um den Spannungsabfall an den Widerständen R1, R2 und der Diode D3 verminderte Identifikationsspannung. Die Eingangsbeschaltung der Komparatoren K1, K2 umfaßt weitere Widerstände R8, R9, R10, wobei diese und der Widerstand R3 derart dimensioniert sind, daß sowohl am Ausgang des Komparators K1 als auch am Ausgang des Komparators K2 ein 1-Pegel anliegt. Die Widerstände R4 und R5 sind im Vergleich zu dem Widerstand R3 hochohmig ausgelegt, damit der Strom I1 weitestgehend über die Versorgungsleitung 10 zum Widerstand R3 fließt. Die an den Widerständen R4 und R5 anliegende Spannung ist so gering, daß der Optokoppler OKa und die Leuchtdiode LEDa nicht geflutet werden. Aufgrund einer in der Versorgungs- und Identifikationseinrichtung 9 hinterlegten Bearbeitungsvorschrift erkennt die Einrichtung 9 aus der Bitkombination 1, 1 der Ausgangssignalpegel der Komparatoren K1, K2, daß das Modul 6a ein Digitalausgabemodul ist. Nach dieser Identifizierung beaufschlagt die Einrichtung 9 das Modul 6b über die Leitung 12b mit der Prüfspannung +5 V, wodurch ein Strom I2 über die Widerstände R1, R2, einen Widerstand R6, eine Diode D4 und den Widerstand R3 fließt. Der Widerstand R6 der Einrichtung 8b ist so dimensioniert, daß ein Spannungsabfall am Widerstand R3 am Komparator K1 einen Ausgangspegel 0 und am Komparator K2 einen Ausgangspegel 1 bewirkt. Der Widerstand R7 ist ebenfalls im Vergleich zum Widerstand R3 hochohmig, und eine Diode D5 verhindert, daß bei einem angesteuerten Eingang 2 die Anschaltung 7 im Hinblick auf die Identifikation des Moduls 6b störend beeinflußt wird. Entsprechend der Bearbeitungsvorschrift erkennt die Einrichtung 9 der Anschaltung 7 aus der Bitkombination 0, 1 der Ausgangssignalpegel der Komparatoren K1, K2 ein Digitaleingabemodul. Für den Fall, daß die Komparatoren K1, K2 jeweils einen O-Ausgangspegel aufweisen (Bitkombination 0, 0), erkennt die Einrichtung 9, daß kein Modul im entsprechenden Montageplatz bzw. Steckplatz im dezentralen Peripheriesystem angeordnet ist. Dies ist z. B. dann der Fall, wenn die Einrichtung 9 die Leitung 12c mit der Prüfspannung 5 V beaufschlagt. Am Widerstand R3 liegt eine Identifikationsspannung von 0 V an, was darauf hinweist, daß kein Modul an diese Signalleitung 12c angeschlossen ist.

## Patentansprüche

1. Funktionseinheit (5; 6a, 6b), die über eine Versorgungsleitung (10) und über eine Signalleitung (12a, 12b, ...) an eine Signalverarbeitungsanschaltung (7) anschließbar ist, wobei in einer Normalbetriebsart die Signalverarbeitungsanschaltung (7) der Funktionseinheit (5; 6a, 6b) eine Versorgungsspannung zuführt, **dadurch gekennzeichnet**, daß während einer Identifikationsbetriebsart, in welcher die Signalverarbeitungsanschaltung (7) der Funktionseinheit (5; 6a, 6b) keine Versorgungsspannung zuführt, einer Einrichtung (8a, 8b) der Funktionseinheit (5; 6a, 6b) über die Signalleitung (12a, 12b) ein Abfragesignal der Signalverarbeitungsanschaltung (7) zuführbar ist, aufgrund dessen die Einrichtung (8a, 8b) ein Identifikationssignal erzeugt, welches der Signalverarbeitungsanschaltung (7) den Typ der Funktionseinheit (5; 6a, 6b) anzeigt und welches die Einrichtung (8a, 8b) über die Versorgungsleitung (10) an die Signalverarbeitungsanschaltung (7) zurückführt.

2. Funktionseinheit (5; 6a, 6b) nach Anspruch 1, **dadurch gekennzeichnet**, daß die Einrichtung (8a, 8b) das Identifikationssignal durch Umformung des Abfragesignals erzeugt.

3. Anordnung mit einer Funktionseinheit nach Anspruch 1 oder 2, **dadurch gekennzeichnet**,
- daß weitere mit jeweils einer Einrichtung (8a, 8b) versehene Funktionseinheiten (5, 6a, 6b) über die Versorgungsleitung (10) und jeweils über eine jeder Funktionseinheit (5; 6a, 6b) zugeordnete Signalleitung (12a, 12b) an die Signalverarbeitungsanschaltung (7) anschließbar sind,
- daß während der Identifikationsbetriebsart die Signalverarbeitungsanschaltung (7) den Einheiten (5; 6a, 6b) jeweils ein Abfragesignal zuführt, aufgrund dessen jede der Einrichtungen (8a, 8b) ein Identifikationssignal erzeugt, welches der Signalverarbeitungsanschaltung (7) den Typ der jeweiligen Funktionseinheit (5, 6a, 6b) anzeigt und welches jede der Einrichtungen (8a, 8b) an die Signalverarbeitungsanschaltung (7) über die Versorgungsleitung (10) zurückführt, und
- daß die Signalverarbeitungsanschaltung (7) mit Mitteln (K1, K2, R3, R8, R9, R10) zum Auswerten der Identifikationssignale versehen ist.

4. Anordnung nach Anspruch 3, **dadurch gekennzeichnet**, daß die Signalverarbeitungsanschaltung (7) die Identifikationsbetriebsart zyklisch oder nach vorgebbaren Zeiten einleitet.

5. Peripheriesystem mit mehreren Funktionseinheiten (5; 6a, 6b) nach Anspruch 1 oder 2, wobei die Funktionseinheiten Digitalausgabe- (6a) und Digitaleingabemodule (6b) sind und wobei die Digitalausgabemodule (6a) aus einem Abfragesignal ein erstes Identifikationssignal und die Digitaleingabemodule (6b) ein zweites Identifikationssignal erzeugen.

## Claims

1. Function unit (5; 6a, 6b) which is connectable via a supply line (10) and via a signal line (12a, 12b, ...) to a signal-processing access circuit (7), the signal-processing access circuit (7) of the function unit (5; 6a, 6b) supplying a supply voltage in a normal mode of operation, characterized in that, during an identification mode of operation, in which the signal-processing access circuit (7) of the function unit (5; 6a, 6b) does not supply any supply voltage, an interrogation signal of the signal-processing access circuit (7) can be supplied to a device (8a, 8b) of the function unit (5; 6a, 6b) via the signal line (12a, 12b), on the basis of which interrogation signal the device (8a, 8b) generates an identification signal which indicates to the signal-processing access circuit (7) the type of function unit (5; 6a, 6b) and which the device (8a, 8b) feeds back to the signal-processing access circuit (7) via the supply line (10).

2. Function unit (5; 6a, 6b) according to Claim 1, characterized in that the device (8a, 8b) generates the identification signal by conversion of the interrogation signal.

3. Arrangement having a function unit according to Claim 1 or 2, characterized
- in that further function units (5; 6a, 6b) provided in each case with a device (8a, 8b) are connectable via the supply line (10) and in each case via a signal line (12a, 12b) assigned to each function unit (5; 6a, 6b) to the signal-processing access circuit (7),
- in that, during the identification mode of operation, the signal-processing access circuit (7) supplies in each case to the units (5; 6a, 6b) an interrogation signal, on the basis of which each of the devices (8a, 8b) generates an identification signal which indicates to the signal-processing access circuit (7) the type of the respective function unit (5; 6a, 6b) and which each of the devices (8a, 8b) feeds back to the signal-processing access circuit (7) via the supply line (10), and
- in that the signal-processing access circuit (7) is provided with means (K1, K2, R3, R8, R9, R10) for evaluating the identification signals.

4. Arrangement according to Claim 3, characterized in that the signal-processing access circuit (7) initiates the identification mode of operation cyclically or after preset times.

5. Peripheral system comprising a plurality of function units (5; 6a, 6b) according to Claim 1 or 2, wherein the function units are digital output modules (6a) and digital input modules (6b) and wherein the digital output modules (6a) generate, from an interrogation signal, a first identification signal and the digital input module (6b) generates a second identification signal.

## Revendications

1. Unité fonctionnelle (5 ; 6a, 6b), qui peut être raccordée à une connexion de traitement de signaux (7) par l'intermédiaire d'une ligne d'alimentation (10) et par l'intermédiaire d'une ligne de transmission de signaux (12a, 12b, ...) et dans laquelle, en fonctionnement normal, la connexion de traitement de signaux (7) envoie une tension d'alimentation à l'unité fonctionnelle (5 ; 6a, 6b), caractérisée par le fait que, pendant un fonctionnement en identification, pendant lequel la connexion de traitement de signaux (7) n'envoie pas de tension d'alimentation à l'unité fonctionnelle (5 ; 6a, 6b), un signal d'interrogation de la connexion de traitement de signaux (7) peut être envoyé à un dispositif (8a, 8b) de l'unité fonctionnelle (5 ; 6a, 6b) par l'intermédiaire de la ligne de transmission de signaux (12a, 12b), le dispositif (8a, 8b) produit à cause de ce signal d'interrogation un signal d'identification qui indique à la connexion de traitement de signaux (7) le type de l'unité fonctionnelle (5 ; 6a, 6b) et qui est renvoyé par le dispositif (8a, 8b) à la connexion de traitement de signaux (7) par l'intermédiaire de la ligne d'alimentation (10).

2. Unité fonctionnelle (5 ; 6a, 6b) selon la revendication 1, caractérisée par le fait que le dispositif (8a, 8b) produit le signal d'identification en transformant le signal d'interrogation.

3. Dispositif comportant une unité fonctionnelle selon la revendication 1 ou 2, caractérisé par le fait que
- d'autres unités fonctionnelles (5 ; 6a, 6b) munies chacune d'un dispositif (8a, 8b) peuvent être raccordées à la connexion de traitement de signaux (7) par l'intermédiaire de la ligne d'alimentation (10) et chacune par l'intermédiaire d'une ligne de transmission de signaux (12a, 12b) associée à l'unité fonctionnelle (5 ; 6a, 6b) considérée,
- pendant le fonctionnement en identification, la connexion de traitement de signaux (7) envoie aux unités (5 ; 6a, 6b) à chaque fois un signal d'interrogation à cause duquel chacun des dispositifs (8a, 8b) produit un signal d'identification qui indique à la connexion de traitement de signaux (7) le type de l'unité fonctionnelle (5 ; 6a, 6b) considérée et qui est renvoyé par chacun des dispositifs (8a, 8b) à la connexion de traitement de signaux (7) par l'intermédiaire de la ligne d'alimentation (10), et
- la connexion de traitement de signaux (7) est munie de moyens (K1, K2, R3, R8, R9, R10) destinés à évaluer les signaux d'identification.

4. Dispositif selon la revendication 3, caractérisé par le fait que la connexion de traitement de signaux (7) déclenche le fonctionnement en identification de manière cyclique ou à des intervalles de temps prescrits.

5. Système périphérique comportant plusieurs unités fonctionnelles (5 ; 6a, 6b) selon la revendication 1 ou 2, les unités fonctionnelles étant des modules de sorties numériques (6a) et des modules d'entrées numériques (6b), les modules de sorties numériques (6a) produisant à partir d'un signal d'interrogation un premier signal d'identification et les modules d'entrées numériques (6b) produisant à partir d'un signal d'interrogation un deuxième signal d'identification.
